# EUROPEAN PATENT APPLICATION

(11) **EP 4 819 362 A1**
(43) Date of publication of application: **07.10.2026**
(21) Application number: 24897279.6
(22) Date of filing: 12.11.2024
(51) Int. Cl.: H01M 50/533, H01M 10/04, H01M 10/052, H01M 10/0587, H01M 50/107, H01M 50/152, H01M 50/167, H01M 50/536

(54) **CYLINDRICAL BATTERY**

(30) Priority: 30.11.2023 JP 2023202461
(71) Applicant: Panasonic Intellectual Property Management Co., Ltd., Kadoma-shi, Osaka 571-0057 (JP)
(72) Inventor: KOBAYASHI, Shunsuke, Osaka 571-0057 (JP)
(74) Representative: Eisenführ Speiser
(86) International application number: PCT/JP2024/040125
(87) International publication number: WO 2025/115592

(57) **Abstract**

Provided is a cylindrical battery (10) comprising an electrode body (14), an outer can (16) that is in the form of a bottomed cylinder and accommodates the electrode body (14), a sealing body (17) that closes an opening of the outer can (16), a collector plate (32) that is disposed between the sealing body (17) and the electrode body (14), and a metal plate (40) that is bonded to the surface of the collector plate (32) on the sealing-body (17) side, the cylindrical battery (10) being characterized in that: the metal plate (40) has a top portion (43) and a side-surface portion (44), the metal plate (40) also having a protruding portion (41) that is provided in the central portion of the metal plate (40), and a flange portion (42) that is provided around the protruding part (41); and the top portion (43) is bonded to the sealing body (17).

## Description

### TECHNICAL FIELD

The present disclosure relates to a cylindrical battery.

### BACKGROUND ART

A cylindrical battery generally comprises a wound electrode assembly, a bottomed cylindrical housing can that houses the electrode assembly, and a sealing assembly with which an opening portion of the housing can is capped. PATENT LITERATURE 1 discloses a cylindrical battery having, inside a housing can, a current collecting plate to which a positive electrode lead extending from a positive electrode of an electrode assembly is connected.

### CITATION LIST

### PATENT LITERATURE

PATENT LITERATURE 1: International Publication No. WO 2023/281973

### SUMMARY

However, in a situation such as when an external short circuit occurs while the battery is in a charged state, for example, the cylindrical battery may experience abnormal heat generation in the electrode assembly due to a large current applied to the electrode assembly. Then, gas is generated in the battery, thereby causing an increase in an internal pressure of the battery, so that the sealing assembly may be deformed toward the outside of the battery. When the sealing assembly is deformed toward the outside of the battery, the gas is injected from the sealing assembly side, which may be undesirable from the viewpoint of ensuring the safety of the battery.

The sealing assembly or the current collecting plate may be bent and deformed toward the inside of the battery when a load is applied from the outside of the battery toward the inside of the battery. When the sealing assembly or the current collecting plate is bent and deformed toward the inside of the battery, the sealing assembly or the current collecting plate contacts an electrode plate of the electrode assembly, and an internal short circuit occurs, which may impair the battery performance. Furthermore, when the internal short circuit occurs, a large current is applied to the electrode assembly, which may cause abnormal heat generation in the electrode assembly, as in the case of the external short circuit.

A cylindrical battery of one aspect of the present disclosure comprises an electrode assembly of a first electrode and a second electrode that are wound with a separator interposed between the first electrode and the second electrode, a bottomed cylindrical housing can that houses the electrode assembly, a sealing assembly with which an opening portion of the housing can is capped, a current collecting plate that is disposed between the sealing assembly and the electrode assembly, and a metal plate that is joined to a surface of the current collecting plate at a side of the sealing assembly, in which the metal plate has a projection portion that has a top portion and a side surface portion and is provided at a center portion of the metal plate, and a flange portion provided around the projection portion, and the top portion is joined to the sealing assembly.

According to the cylindrical battery according to one aspect of the present disclosure, the deformation of the sealing assembly and the current collecting plate can be reduced. As a result, the battery performance of the cylindrical battery and the safety of the battery can be achieved.

### BRIEF DESCRIPTION OF DRAWING

FIG. 1 is an axial sectional view of a cylindrical battery of a first embodiment.
FIG. 2 is a perspective view of an electrode assembly included in the cylindrical battery of the first embodiment.
FIG. 3 is a top view of a current collecting plate included in the cylindrical battery of the first embodiment.
FIG. 4 is an axial sectional view of the current collecting plate included in the cylindrical battery of the first embodiment.
FIG. 5 is an axial sectional view of a cylindrical battery of a second embodiment.
FIG. 6 is a perspective view of an electrode assembly included in the cylindrical battery of the second embodiment.
FIG. 7 is a diagram illustrating a modification of the current collecting plate included in the cylindrical battery.
FIG. 8 is a diagram illustrating a modification of the current collecting plate included in the cylindrical battery.
FIG. 9 is a diagram illustrating a modification of a cylindrical battery.

### DESCRIPTION OF EMBODIMENTS

Hereinafter, examples of embodiments of a cylindrical battery according to the present disclosure will be described in detail with reference to the drawings. The embodiments described below are only examples, and the present disclosure is not limited to the embodiments described below. Configurations formed by selectively combining the constituent elements of embodiments described below are included in the present disclosure.

### [First Embodiment]

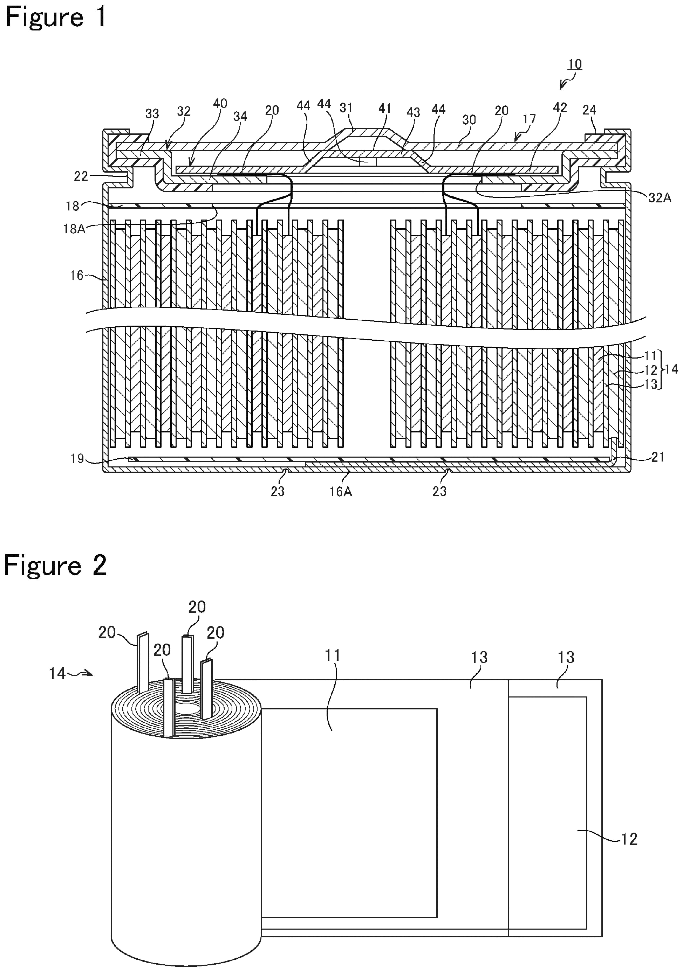

A configuration of a cylindrical battery 10 of a first embodiment will be described with reference to FIGS. 1 and 2. FIG. 1 is a diagram schematically illustrating a cross section of the cylindrical battery 10, and FIG. 2 is a perspective view of an electrode assembly 14 included in the cylindrical battery 10.

As illustrated in FIGS. 1 and 2, the cylindrical battery 10 comprises the electrode assembly 14 of a first electrode and a second electrode that are wound with a separator interposed therebetween, a non-aqueous electrolyte (not illustrated), a housing can 16 that houses the electrode assembly 14 and the non-aqueous electrolyte, a sealing assembly 17 with which an opening portion of the housing can 16 is capped, a current collecting plate 32 that is disposed between the sealing assembly 17 and the electrode assembly 14, and a metal plate 40 that is joined to an upper surface of the current collecting plate 32. In this specification, a sealing assembly 17 side of the cylindrical battery 10 will be defined as "upper", and a bottom 16A side of the housing can 16 will be defined as "lower". Hereinafter, a case will be described where the first electrode is a positive electrode 11 and the second electrode is a negative electrode 12.

The electrode assembly 14 has a positive electrode 11, a negative electrode 12, and a separator 13, and has a wound structure in which the positive electrode 11 and the negative electrode 12 are spirally wound with the separator 13 interposed therebetween. Each of the positive electrode 11, the negative electrode 12, and the separator 13 constituting the electrode assembly 14 is a band-shaped elongate body, and the positive electrode 11, the negative electrode 12, and the separator 13 are spirally wound so as to be alternately stacked in a radial direction of the electrode assembly 14. The negative electrode 12 is formed slightly larger than the positive electrode 11 in order to prevent precipitation of lithium. That is, the negative electrode 12 is formed longer in a longitudinal direction and a width direction than the positive electrode 11. The separator 13 is formed slightly larger than both the positive electrode 11 and the negative electrode 12, and, for example, two separators 13 are disposed such that the positive electrode 11 is interposed therebetween.

The electrode assembly 14 has a positive electrode lead 20 connected to the positive electrode 11 by welding or the like and a negative electrode lead 21 connected to the negative electrode 12 by welding or the like. In the present embodiment, the electrode assembly 14 has a plurality of positive electrode leads 20. Alternatively, the number of positive electrode leads 20 may be one. The number of negative electrode leads 21 may be one or plural.

The positive electrode 11 has a positive electrode core and a positive electrode mixture layer formed on the positive electrode core. For the positive electrode core, a foil of metal such as aluminum or an aluminum alloy, which is stable within a potential range of the positive electrode 11, a film in which such a metal is disposed on a surface layer thereof, or the like can be used. The positive electrode mixture layer includes a positive electrode active material, a conductive agent, and a binder, and is preferably formed on each surface of the positive electrode core except for a positive electrode core exposed portion (not illustrated) to which the positive electrode lead 20 is welded. The positive electrode 11 is produced by: applying a positive electrode mixture slurry including the positive electrode active material, the conductive agent, the binder, and the like on the positive electrode core; drying the resulting coating film; and then compressing the coating film to form a positive electrode mixture layer on each surface of the positive electrode core.

The positive electrode mixture layer includes a particulate lithium metal composite oxide as the positive electrode active material. The lithium metal composite oxide is a composite oxide containing metal elements such as Co, Mn, Ni, and Al in addition to Li. Examples of metal elements contained in the lithium metal composite oxide include at least one selected from the group consisting of Mg, Al, Ca, Sc, Ti, V, Cr, Mn, Fe, Co, Ni, Cu, Zn, Ga, Ge, Y, Zr, Sn, Sb, W, Pb, and Bi. In particular, the lithium metal composite oxide preferably contains at least one selected from the group consisting of Co, Ni, and Mn. Examples of a preferable composite oxide include a lithium metal composite oxide containing Ni, Co, and Mn and a lithium metal composite oxide containing Ni, Co, and Al.

Examples of the conductive agent included in the positive electrode mixture layer may include carbon materials such as carbon black such as acetylene black and Ketjenblack, graphite, carbon nanotubes (CNT), carbon nanofiber, and graphene. Examples of the binder included in the positive electrode mixture layer may include fluorine-containing resin such as polytetrafluoroethylene (PTFE) and polyvinylidene fluoride (PVDF), polyacrylonitrile (PAN), a polyimide, acrylic resin, and a polyolefin. These resins may be used in combination with carboxymethyl cellulose (CMC) or a salt thereof, or a polyethylene oxide (PEO), or the like.

The negative electrode 12 has a negative electrode core and a negative electrode mixture layer formed on the negative electrode core. For the negative electrode core, a foil of metal such as copper or a copper alloy, which is stable within a potential range of the negative electrode 12, a film in which such a metal is disposed on a surface layer thereof, or the like can be used. The negative electrode mixture layer includes a negative electrode active material and a binder and, as necessary, a conductive agent and is preferably formed on each surface of the negative electrode core. The negative electrode 12 is produced by: applying a negative electrode mixture slurry including the negative electrode active material, the binder, and the like on a surface of the negative electrode core; drying the resulting coating film; and then compressing the coating film to form a negative electrode mixture layer on each surface of the negative electrode core.

In the negative electrode mixture layer, a carbon material which reversibly occludes and releases lithium ions is generally included as the negative electrode active material. A preferable example of the carbon material includes graphite including natural graphite such as flaky graphite, massive graphite, and earthy graphite, and artificial graphite such as massive artificial graphite (MAG) and graphitized mesophase carbon microbeads (MCMB). As the negative electrode active material, a material including at least one of an element which alloys with Li such as Si or Sn and a material containing such an element may be used. In particular, a composite material containing Si is preferably used.

Preferable examples of a composite material containing Si include a material containing Si microparticles dispersed in an SiO₂ phase or a phase of silicate such as lithium silicate, and a material containing Si microparticles dispersed in an amorphous carbon phase. For example, a conductive layer such as a carbon coating is formed on each surface of particles in the composite material. From the viewpoint of achieving both high capacity and high durability of the battery, it is preferable to use the carbon material and the Si-containing composite material in combination as the negative electrode active material.

As the binder included in the negative electrode mixture layer, fluorine-containing resin, a polyimide, acrylic resin, a polyolefin, and the like can be used as in the case of the positive electrode mixture layer, but a styrene-butadiene rubber (SBR) is preferably used. The negative electrode mixture layer preferably includes CMC or a salt thereof, polyacrylic acid (PAA) or a salt thereof, polyvinyl alcohol (PVA), or the like. In particular, it is preferable to use SBR in combination with CMC or a salt thereof or PAA or a salt thereof. The conductive agent such as CNT may be included in the negative electrode mixture layer.

A porous sheet having ion permeability and an insulation property is used for the separator 13. Specific examples of the porous sheet include a microporous thin film, a woven fabric, and a nonwoven fabric. The material of the separator 13 is preferably a polyolefin such as polyethylene or polypropylene, or a cellulose. The separator 13 may be either a single layer structure or a multi-layer structure. A heat-resistant resin layer such as aramid resin may be formed on a surface of the separator 13. On an interface between the separator 13 and at least one of the positive electrode 11 and the negative electrode 12, a filler layer including an inorganic filler may be formed.

The non-aqueous electrolyte has lithium ion conductivity. The non-aqueous electrolyte may be a liquid electrolyte (electrolyte solution), or may be a solid-state electrolyte.

The liquid electrolyte (electrolyte solution) includes a non-aqueous solvent, and an electrolyte salt dissolved in the non-aqueous solvent. For the non-aqueous solvent, for example, esters, ethers, nitriles, amides, or mixed solvents of two or more of these are used. Examples of the non-aqueous solvent include ethylene carbonate (EC), ethylmethyl carbonate (EMC), dimethyl carbonate (DMC), diethyl carbonate (DEC), and mixed solvents of these. The non-aqueous solvent may contain a halogen-substituted product (for example, fluoroethylene carbonate) obtained by substituting at least a part of hydrogen in these solvents with a halogen atom such as fluorine. For the electrolyte salt, for example, a lithium salt such as LiPF₆ is used.

As the solid-state electrolyte, for example, a solid-state or gel-state polymer electrolyte, an inorganic solid-state electrolyte, or the like can be used. As the inorganic solid-state electrolyte, a material known in an all-solid-state lithium ion secondary battery and the like (for example, an oxide-based solid-state electrolyte, a sulfide-based solid-state electrolyte, and a halide-based solid-state electrolyte) is used. The polymer electrolyte includes, for example, a lithium salt and a matrix polymer, or a non-aqueous solvent, a lithium salt, and a matrix polymer. As the matrix polymer, for example, a polymer material which absorbs the non-aqueous solvent and gels is used. Examples of the polymer material include fluororesin, acrylic resin, or polyether resin.

Insulating plates 18 and 19 are provided on the upper and lower sides of the electrode assembly 14, respectively. The positive electrode lead 20 extends toward the sealing assembly 17 side through a through hole 18A provided in the insulating plate 18, and a through hole 32A provided in the current collecting plate 32. Then, the positive electrode lead 20 is bent along an upper surface of a recessed portion 34 in the current collecting plate 32, and is joined thereto by welding or the like so as to be held between the current collecting plate 32 and the metal plate 40. Holding the positive electrode lead 20 between the current collecting plate 32 and the metal plate 40 makes it difficult to detach the positive electrode lead 20 from the surface of the current collecting plate 32 and makes it possible to improve the workability of welding the positive electrode lead 20. Although described in detail later, the current collecting plate 32 and the sealing assembly 17 are electrically connected to each other. Therefore, the sealing assembly 17 serves as a positive electrode terminal. In the present embodiment, the negative electrode lead 21 extends toward the bottom 16A side of the housing can 16 through the outside of the insulating plate 19. Then, the negative electrode lead 21 is joined to the inner surface of the bottom 16A of the housing can 16 by welding or the like. Thus, the housing can 16 serves as a negative electrode terminal. The negative electrode lead 21 may extend toward the bottom 16A side of the housing can 16 through a center portion of the insulating plate 19. Alternatively, the negative electrode core may be exposed to the outermost periphery of the electrode assembly 14 without providing the negative electrode lead 21 to bring the negative electrode core into contact with an inner surface of the housing can 16.

The housing can 16 is a bottomed cylindrical metallic container which opens at one side in an axial direction. The opening portion of the housing can 16 is capped with the sealing assembly 17. A gasket 24 is provided between the housing can 16 and the sealing assembly 17 to achieve sealability inside the battery. Providing the gasket 24 makes it possible to achieve an insulation property between the housing can 16 and the sealing assembly 17. That is, the gasket 24 has a role as a seal member for maintaining the airtightness inside the battery, and a role as an insulating member for insulating the sealing assembly 17 from the housing can 16.

On the housing can 16, a grooved portion 22 in which a part of a side wall thereof projects inward for supporting the sealing assembly 17 and the current collecting plate 32 is formed. The grooved portion 22 is preferably formed in an annular shape along a circumferential direction of the housing can 16, and supports the sealing assembly 17 and the current collecting plate 32 on the upper surface thereof. The grooved portion 22 can be formed by, for example, depressing a part of the side wall of the housing can 16 toward the radially inner side by a radially inward spinning process. The sealing assembly 17 and the current collecting plate 32 are fixed on the upper portion of the housing can 16 with the grooved portion 22 and with an end portion of the opening of the housing can 16 crimped to the sealing assembly 17.

A gas discharge port that is opened when an internal pressure of the cylindrical battery 10 reaches a predetermined pressure is provided in the bottom 16A of the housing can 16. That is, in the present embodiment, the gas discharge port provided in the bottom 16A of the housing can 16 is configured to discharge gas therefrom when the internal pressure of the battery increases due to abnormal heat generation or the like of the electrode assembly 14.

In the bottom 16A of the housing can 16, for example, an annular groove 23 is formed, and a portion surrounded by the groove 23 serves as the gas discharge port. The groove 23 may be formed in a C shape or the like in a bottom view, but is preferably formed in a perfect circle shape in a bottom view from the viewpoint of improving the rupturability during a rise in internal pressure. The groove 23 is, for example, a mark formed from an outer surface side of the bottom 16A.

The sealing assembly 17 has a function of capping the opening portion of the housing can 16 therewith as described above. In the present embodiment, the sealing assembly 17 is formed by one sealing plate 30. The sealing assembly 17 may have any configuration which allows the opening portion of the housing can 16 to be capped therewith. The sealing assembly 17 may have a structure in which a plurality of members are stacked in the axial direction. The sealing assembly 17 may have, for example, a cap member on an upper portion of the sealing plate 30.

A projection portion 31 that projects toward the outside of the battery is provided at a center portion of the sealing plate 30. The projection portion 31 has a substantially perfect circle shape in a top view. Although described in detail later, the sealing plate 30 is joined to the metal plate 40 in the vicinity of the center portion of the sealing plate 30. Therefore, a diameter of the projection portion 31 provided in the sealing plate 30 is configured to be smaller than the diameter of a top portion 43 provided in the metal plate 40. The height of the projection portion 31 is not limited to a particular height, and is, for example, greater than or equal to 0.5 mm and less than or equal to 5.0 mm. The sealing plate 30 may have a flat shape over the entire lower surface.

Examples of the materials of the sealing plate 30 include metal including aluminum as a main component. The sealing plate 30 is crimp-fixed to the opening portion of the housing can 16 via the gasket 24 as described above.

The current collecting plate 32 is disposed between the sealing plate 30 and the electrode assembly 14. The current collecting plate 32 has a peripheral edge portion 33 located in an outer periphery of the current collecting plate 32 and a recessed portion 34 that is provided on a radially inner side of the peripheral edge portion 33 and is recessed downward with respect to the peripheral edge portion 33.

The peripheral edge portion 33 has an annular shape and contacts a lower surface of the sealing plate 30. The peripheral edge portion 33 is joined to the sealing plate 30 by laser welding. The number and area of the welding portions between the peripheral edge portion 33 and the sealing plate 30 are set in consideration of, for example, a joining strength and a resistance. The peripheral edge portion 33 is crimp-fixed to the opening portion of the housing can 16 via the gasket 24. Crimp-fixing the peripheral edge portion 33 to the opening portion of the housing can 16 makes it possible to firmly fix the current collecting plate 32 to the upper portion of the housing can 16.

The recessed portion 34 has a perfect circle shape in a top view. The positive electrode lead 20 is joined to the upper surface of the recessed portion 34. The depth of the recessed portion 34, that is, the axial length from the upper surface of the peripheral edge portion 33 to the upper surface of the recessed portion 34 is, for example, greater than or equal to 0.1 mm and less than or equal to 5.0 mm. The recessed portion 34 is flat, and is provided in substantially parallel to the peripheral edge portion 33.

The through hole 32A is provided at a center portion of the recessed portion 34. The positive electrode lead 20 extending from the positive electrode 11 as described above passes through the through hole 32A. The size of the through hole 32A can be appropriately set according to the number, shape, and the like of the positive electrode leads 20. The diameter of the through hole 32A is, for example, greater than or equal to 20% and less than or equal to 60% of the diameter of the current collecting plate 32.

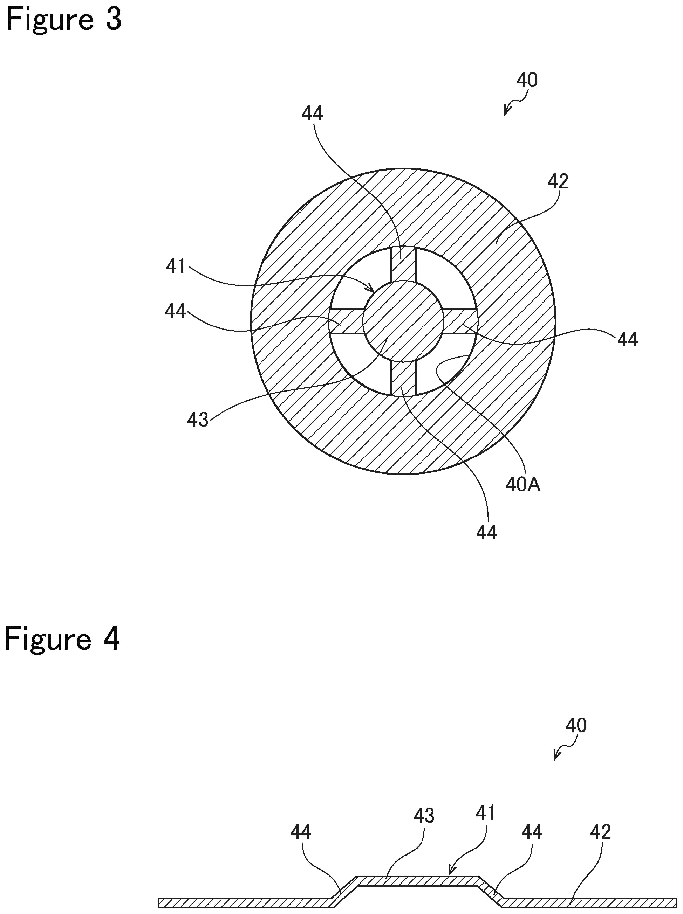

Hereafter, the metal plate 40 will be described in detail further with reference to FIGS. 3 and 4. FIG. 3 is a top view of the metal plate 40, and FIG. 4 is an axial sectional view of the metal plate 40. In FIG. 3, a region in which the metal plate 40 is formed is illustrated with hatching.

As illustrated in FIGS. 1, 3, and 4, the metal plate 40 is a member that is disposed between the sealing plate 30 and the current collecting plate 32 so that the positive electrode lead 20 is held between the metal plate 40 and the current collecting plate 32. Examples of the materials of the metal plate 40 include metal including aluminum as a main component.

The metal plate 40 has a projection portion 41 provided at a center portion of the metal plate 40, and a flange portion 42 that is provided around the projection portion 41 and contacts the positive electrode lead 20. The flange portion 42 is provided to surround the entire periphery of the projection portion 41, and has an annular shape.

The projection portion 41 is a portion projecting upward with respect to the flange portion 42. The projection portion 41 has a top portion 43 that has a substantially perfect circle shape in a top view, and a plurality of side surface portions 44 that connect the top portion 43 and the flange portion 42. In the present embodiment, the projection portion 41 has four side surface portions 44. The top portion 43 is flat, and is provided in substantially parallel to the flange portion 42. The shape of the top portion 43 is not limited to a substantially perfect circle shape in a top view, and may be a substantially rectangular shape in a top view.

Here, the top portion 43 is joined to the sealing plate 30. More specifically, the top portion 43 is joined to a portion around the projection portion 31 in the lower surface of the sealing plate 30. In the present embodiment, the top portion 43 is joined to the sealing plate 30 by laser welding. The number and area of welding portions between the top portion 43 and the sealing plate 30 are set in consideration of, for example, a joining strength and a resistance. In general, the joining strength is increased and the resistance is reduced as the area of the welding portions increases. The welding portions are preferably formed to have a circle shape in a top view from the viewpoint of increasing the joining strength between the metal plate 40 and the sealing plate 30. A method of joining the top portion 43 and the sealing plate 30 is not limited to laser welding, and the top portion 43 and the sealing plate 30 may be joined with an adhesive or the like.

The top portion 43 of the metal plate 40 is joined to the sealing plate 30, so that the strength at the center portion of the sealing plate 30 can be increased. This can reduce the deformation of the sealing plate 30 toward the outside of the battery when the internal pressure increases at the time of occurrence of an abnormality of the battery and a pushing load toward the outside of the battery is applied to the sealing plate 30. As a result, it is possible to prevent gas inside the battery from being discharged from the upper side (sealing plate 30 side) of the battery, so that the safety of the battery is improved.

Joining the top portion 43 of the metal plate 40 to the sealing plate 30 makes it possible to reduce the bending deformation of the sealing plate 30, the current collecting plate 32, and the metal plate 40 toward the inside of the battery when a load is applied from the outside of the battery toward the inside of the battery. As a result, this can reduce the occurrence of internal short circuit due to contact of the deformed sealing plate 30, current collecting plate 32, and metal plate 40 with the negative electrode 12, so that the battery performance can be ensured.

The side surface portion 44 is a pillar connecting the top portion 43 and the flange portion 42. The four side surface portions 44 have the same shape.

In the present embodiment, the side surface portion 44 extends along a direction inclined with respect to the axial direction. An inclination angle of the side surface portion 44 in the extending direction with respect to the axial direction is, for example, greater than or equal to 20° and less than or equal to 70°, and preferably greater than or equal to 30° and less than or equal to 60°. Setting the inclination angle to greater than or equal to 30° and less than or equal to 60° makes it possible to reduce the bending deformation of the sealing plate 30, the current collecting plate 32, and the metal plate 40 toward the inside of the battery when a load is applied from the outside of the battery toward the inside of the battery. Alternatively, the side surface portion 44 may extend along the axial direction. That is, the side surface portion 44 may be provided to be substantially vertical to the flange portion 42 and the top portion 43.

As illustrated in FIG. 3, the four side surface portions 44 are provided at equal angular intervals from one another in the circumferential direction. As the side surface portions 44 are provided at equal angular intervals from one another in the circumferential direction, when a load is applied to the metal plate 40 from the outside of the battery, the applied load is distributed to the side surface portions 44, so that the side surface portions 44 are less likely to be deformed. As a result, this facilitates an increase in the strength of the center portion of the sealing plate 30, so that the effect of the present disclosure can be more pronounced.

The side surface portions 44 are preferably connected to a region of greater than or equal to 10% of an outer periphery of the top portion 43, and are more preferably connected to a region of greater than or equal to 15% of the outer periphery of the top portion 43. In this case, the strength of the side surface portion 44 increases, facilitating an increase in the strength of the center portion of the sealing plate 30, so that the effect of the present disclosure can be more pronounced.

A through hole 40A is formed between the side surface portions 44 adjacent to each other in the circumferential direction. That is, four through holes 40A are formed at the side of the projection portion 41. By providing the through holes 40A, when gas is generated inside the battery at the time of occurrence of an abnormality and the internal pressure of the battery increases, the gas flows into a space in the upper portion of the metal plate 40 via the through holes 40A. This makes it possible to reduce the internal pressure of the battery.

The metal plate 40 need not have a through hole 40A. That is, the side surface portion 44 of the projection portion 41 may be formed over the entire periphery of the top portion 43. The strength of the metal plate 40 can be further increased by forming the side surface portion 44 over the entire periphery of the top portion 43.

The projection portion 41 may have any height that allows the top portion 43 to be joined to the sealing plate 30, but is, for example, greater than or equal to 0.5 mm and less than or equal to 5.0 mm.

The flange portion 42 is provided around the projection portion 41, and is disposed to face the recessed portion 34 of the current collecting plate 32 via the positive electrode lead 20. The positive electrode lead 20 is joined to the metal plate 40, for example, by laser welding in a state in which the positive electrode lead 20 is sandwiched between the flange portion 42 and the recessed portion 34 of the current collecting plate 32.

The flange portion 42 may have any size which allows the positive electrode leads 20 to be joined thereto, but has, for example, a size that can cover the substantially entire region of the upper surface of the recessed portion 34 of the current collecting plate 32. For example, the radial length of the flange portion 42 is greater than or equal to 30% and less than or equal to 70% of the radius of the metal plate 40.

### [Second Embodiment]

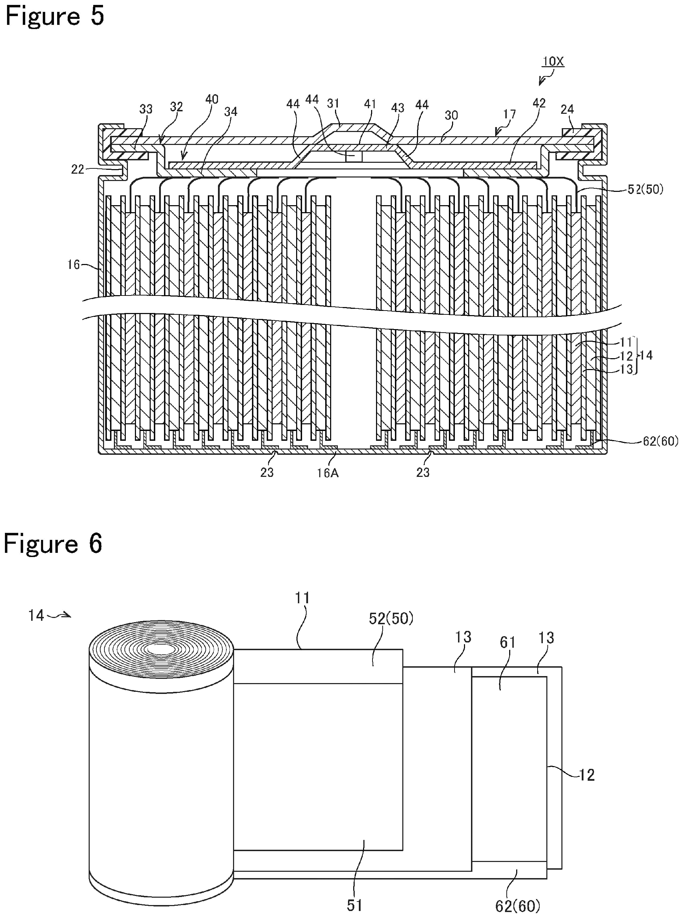

Next, a configuration of a cylindrical battery 10X of a second embodiment will be described with reference to FIGS. 5 and 6. FIG. 5 is a diagram schematically illustrating a cross section of the cylindrical battery 10X, and FIG. 6 is a perspective view of an electrode assembly 14 included in the cylindrical battery 10X. In the following description, the components common to those in the first embodiment are denoted by the same reference numerals, duplicate descriptions are omitted, and different points from the first embodiment will be mainly described.

As illustrated in FIG. 5, the cylindrical battery 10X of the second embodiment is the same as the cylindrical battery 10 of the first embodiment in that the cylindrical battery comprises an electrode assembly 14, a non-aqueous electrolyte (not illustrated), a housing can 16 that houses the electrode assembly 14 and the non-aqueous electrolyte, a sealing assembly 17 with which an opening portion of the housing can 16 is capped, a current collecting plate 32 that is disposed between the sealing assembly 17 and the electrode assembly 14, and a metal plate 40 that is joined to an upper surface of the current collecting plate 32. On the other hand, although described in detail later, the electrode assembly 14 of the second embodiment is different from that of the first embodiment in that the positive electrode lead 20 (see FIG. 1) and the negative electrode lead 21 (see FIG. 1) are not provided. The cylindrical battery 10X of the second embodiment is different from that of the first embodiment in that the insulating plates 18 and 19 (see FIG. 1) are not disposed on the upper and lower sides of the electrode assembly 14.

As illustrated in FIG. 6, the electrode assembly 14 has a positive electrode 11, a negative electrode 12, and a separator 13, and has a structure in which the positive electrode 11 and the negative electrode 12 are spirally wound with the separator 13 interposed therebetween. Each of the positive electrode 11, the negative electrode 12, and the separator 13 constituting the electrode assembly 14 is a band-shaped elongate body, and the positive electrode 11, the negative electrode 12, and the separator 13 are spirally wound so as to be alternately stacked in a radial direction of the electrode assembly 14. The positive electrode 11 projects upward with respect to the negative electrode 12 and the separator 13, and the negative electrode 12 projects downward with respect to the positive electrode 11 and the separator 13.

The positive electrode 11 has a positive electrode core exposed portion 52 from which a positive electrode core 50 is exposed without providing a positive electrode mixture layer 51, at an upper end portion in the axial direction. The positive electrode core exposed portion 52 is provided over a range from a winding start-side end to a winding finish-side end of the elongate positive electrode 11 in a longitudinal direction. The negative electrode 12 has a negative electrode core exposed portion 62 from which a negative electrode core 60 is exposed without providing a negative electrode mixture layer 61, at a lower end portion in the axial direction. The negative electrode core exposed portion 62 is provided over a range from a winding start-side end to a winding finish-side end of the elongate negative electrode 12 in a longitudinal direction. Therefore, the upper end portion in the axial direction of the electrode assembly 14 is constituted by the positive electrode core exposed portion 52, and the lower end portion in the axial direction of the electrode assembly 14 is constituted by the negative electrode core exposed portion 62. The width of the positive electrode core exposed portion 52 is, for example, greater than or equal to 2 mm and less than or equal to 20 mm, and the width of the negative electrode core exposed portion 62 is, for example, greater than or equal to 2 mm and less than or equal to 20 mm.

As illustrated in FIG. 5, the positive electrode core exposed portion 52 extends in substantially parallel to the axial direction of the electrode assembly 14 from the upper end surface of the electrode assembly 14. Then, the positive electrode core exposed portion 52 is bent toward the radially inner side at the upper end portion and is joined to the lower surface of the flange portion 42 of the metal plate 40. Joining the positive electrode core exposed portion 52 to the metal plate 40 makes it possible to increase a contact area between the positive electrode core exposed portion 52 and the metal plate 40, so that the internal resistance of the positive electrode 11 can be reduced as compared with the case where the positive electrode lead 20 (see FIG. 1) is used.

As illustrated in FIG. 5, the negative electrode core exposed portion 62 extends in substantially parallel to the axial direction of the electrode assembly 14 from the lower end surface of the electrode assembly 14. Then, the negative electrode core exposed portion 62 is bent toward the radially inner side at the lower end portion and is joined to the inner surface of a bottom 16A of the housing can 16. In the present embodiment, the negative electrode core exposed portion 62 is joined to the housing can 16, but the negative electrode lead 21 may be joined to the inner surface of the bottom 16A of the housing can 16 as in the first embodiment. That is, the electrode assembly 14 may have only the negative electrode lead 21 without the positive electrode lead 20.

The metal plate 40 of the second embodiment is provided with a projection portion 41 at a center portion thereof as in the first embodiment. The projection portion 41 has a top portion 43 and a side surface portion 44, and the top portion 43 is joined to the sealing plate 30. Also when the positive electrode core exposed portion 52 is joined to the lower surface of the metal plate 40, the strength of the center portion of the sealing plate 30 can be increased by joining the top portion 43 of the metal plate 40 to the sealing plate 30.

As described above, the metal plate 40 having the projection portion 41 is disposed between the sealing assembly 17 and the current collecting plate 32, and the top portion 43 of the projection portion 41 and the sealing assembly 17 are joined, so that the strength of the center portion of the sealing plate 30 can be increased. This can reduce the deformation of the sealing plate 30 toward the outside of the battery, for example, when the internal pressure increases at the time of occurrence of an abnormality of the battery and a pushing load toward the outside of the battery is applied to the sealing plate 30. In addition, this makes it possible to reduce the bending deformation of the sealing plate 30, the current collecting plate 32, and the metal plate 40 toward the inside of the battery when a load is applied from the outside of the battery toward the inside of the battery. As a result, the battery performance and the safety of the battery can be ensured.

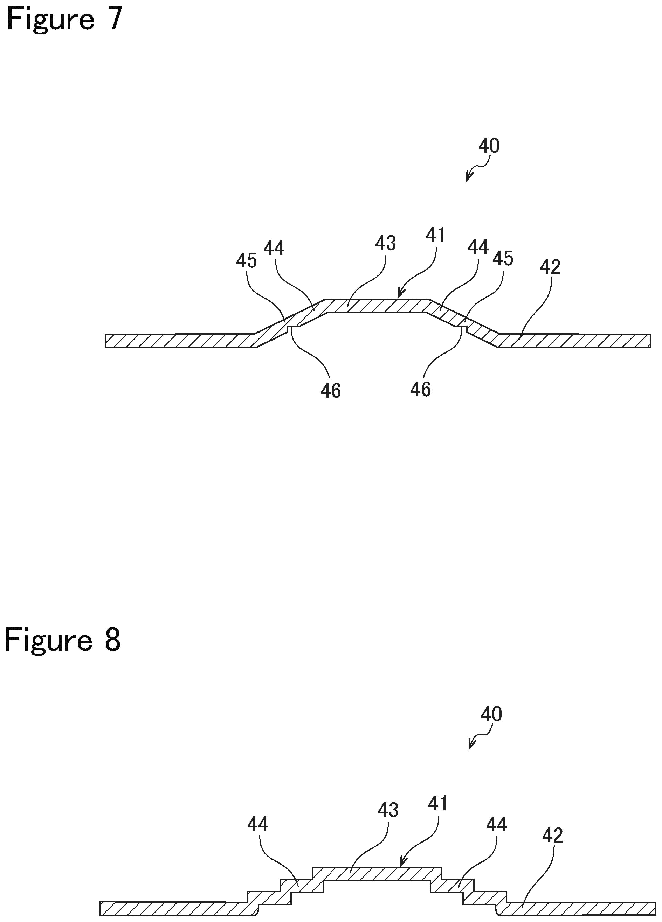

The above-described embodiments may be modified or changed as appropriate without departing from the scope of the present disclosure. For example, as illustrated in FIG. 7, a thin portion 45 formed so that a lower surface is recessed may be provided in the side surface portion 44 of the metal plate 40. The thin portion 45 functions as an easily deformable portion that is preferentially deformed when the cylindrical battery 10 is pressed from the radially outer side toward the radially inner side. Then, providing the thin portion 45 in the lower surface of the side surface portion 44 makes it possible to deform to bend the side surface portion 44 toward the upper side starting from the thin portion 45 when the cylindrical battery 10 is pressed from the radially outer side toward the radially inner side. That is, providing the thin portion 45 in the lower surface of the side surface portion 44 makes it possible to reduce the downward deformation of the metal plate 40 when the cylindrical battery 10 is pressed from the radially outer side toward the radially inner side. This can reduce the occurrence of internal short circuit due to contact of the metal plate 40 with the negative electrode 12, so that the battery performance can be ensured.

The thin portion 45 is formed, for example, along the circumferential direction. The number of the thin portions 45 provided in the side surface portion 44 may be one, or may be greater than or equal to two. However, when the metal plate 40 has a plurality of side surface portions 44, the thin portion 45 is preferably provided in each of the side surface portions 44.

The thin portion 45 may have any size, shape, and the like which can exhibit the function as the above-described easily deformable portion. In the example illustrated in FIG. 7, the thin portion 45 is formed by forming a V-shaped groove 46 in the lower surface of the side surface portion 44. The minimum thickness of the thin portion 45 is, for example, greater than or equal to 30% and less than or equal to 70% of the thickness of a portion other than the thin portion 45 in the side surface portion 44.

As illustrated in FIG. 8, the side surface portion 44 of the metal plate 40 may have a bent shape. Providing the side surface portion 44 having a bent shape makes it possible to deform to fold the side surface portion 44 starting from a bent portion when the cylindrical battery 10 is pressed from the radially outer side toward the radially inner side. That is, providing the side surface portion 44 having a bent shape makes it possible to reduce the downward deformation of the metal plate 40 when the cylindrical battery 10 is pressed from the radially outer side toward the radially inner side. This can reduce the occurrence of internal short circuit due to contact of the metal plate 40 with the negative electrode 12, so that the battery performance can be ensured.

In the embodiment described above, a case has been described where the first electrode is the positive electrode 11 and the second electrode is the negative electrode 12, but the first electrode may be the negative electrode 12 and the second electrode may be the positive electrode 11. That is, in the first embodiment, the negative electrode lead 21 extending from the negative electrode 12 may be joined to the current collecting plate 32, and the positive electrode lead 20 extending from the positive electrode 11 may be joined to the housing can 16. In the second embodiment, the negative electrode 12 may project upward with respect to the positive electrode 11 and the separator 13, and the positive electrode 11 may project downward with respect to the negative electrode 12 and the separator 13.

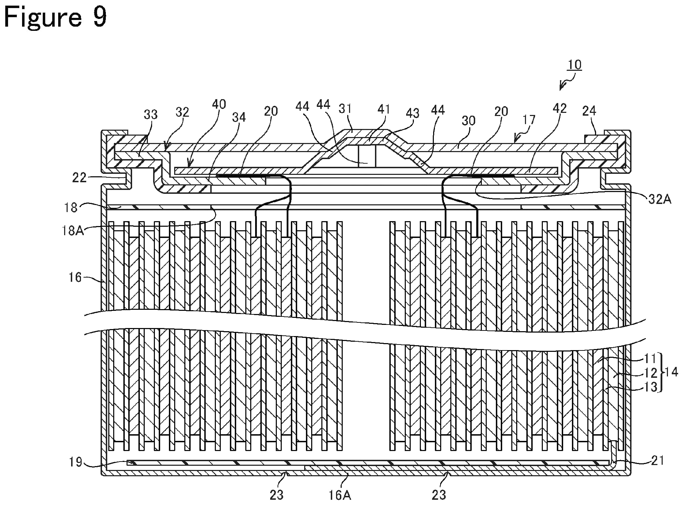

In the embodiment described above, the top portion 43 of the projection portion 41 of the metal plate 40 has a flat shape, but the top portion 43 may have an uneven shape. As illustrated in FIG. 9, the projection portion 41 of the metal plate 40 may have a plurality of steps. A configuration may be adopted in which the top portion 43 of the projection portion 41 is joined to the lower surface of the sealing plate 30, and the side surface portion 44 of the projection portion 41 contacts the inner surface of the projection portion 31 of the sealing plate 30. The above-described configuration makes it possible to increase the space through which gas flows when the internal pressure of the battery increases, so that the internal pressure of the battery can be further reduced.

The present disclosure will be further described by the following embodiments.

Configuration 1: A cylindrical battery comprising: an electrode assembly of a first electrode and a second electrode that are wound with a separator interposed between the first electrode and the second electrode; a bottomed cylindrical housing can that houses the electrode assembly; a sealing assembly with which an opening portion of the housing can is capped; a current collecting plate that is disposed between the sealing assembly and the electrode assembly; and a metal plate that is joined to a surface of the current collecting plate at a side of the sealing assembly, wherein the metal plate has a projection portion that has a top portion and a side surface portion and is provided at a center portion of the metal plate, and a flange portion provided around the projection portion, and the top portion is joined to the sealing assembly.

Configuration 2: The cylindrical battery described in configuration 1, wherein the electrode assembly has an electrode lead connected to the first electrode, and the electrode lead is held between the current collecting plate and the metal plate.

Configuration 3: The cylindrical battery described in configuration 1, wherein the first electrode has a first electrode core, and a first electrode mixture layer formed on a surface of the first electrode core, a first electrode core exposed portion from which the first electrode core is exposed is provided at an end portion of the electrode assembly at the side of the sealing assembly, and the first electrode core exposed portion is joined to a surface of the current collecting plate at a side of the electrode assembly.

Configuration 4: The cylindrical battery described in any one of configurations 1 to 3, wherein the projection portion has a through hole.

Configuration 5: The cylindrical battery described in any one of configurations 1 to 4, wherein the projection portion has a plurality of the side surface portions, and the side surface portions are provided at equal angular intervals from one another in a circumferential direction.

Configuration 6: The cylindrical battery described in any one of configurations 1 to 5, wherein the side surface portion extends along a direction inclined with respect to an axial direction of the housing can, and an inclination angle of the side surface portion in an extending direction with respect to the axial direction of the housing can is greater than or equal to 30° and less than or equal to 60°.

Configuration 7: The cylindrical battery described in any one of configurations 1 to 6, wherein a peripheral edge portion provided on an outer periphery of the current collecting plate is joined to the sealing assembly.

Configuration 8: The cylindrical battery described in any one of configurations 1 to 7, wherein the current collecting plate is crimp-fixed to the opening portion of the housing can.

Configuration 9: The cylindrical battery described in any one of configurations 1 to 8, wherein the projection portion has a plurality of steps.

Configuration 10: The cylindrical battery described in any one of configurations 1 to 9, wherein at least a part of the side surface portion contacts the sealing assembly.

### REFERENCE SIGNS LIST

10, 10X Cylindrical battery (battery), 11 Positive electrode (first electrode), 12 Negative electrode (second electrode), 13 Separator, 14 Electrode assembly, 16 Housing can, 16A Bottom, 17 Sealing assembly, 18 Insulating plate, 18A Through hole, 19 Insulating plate, 20 Positive electrode lead, 21 Negative electrode lead, 22 Grooved portion, 23 Groove, 24 Gasket, 30 Sealing plate, 31 Projection portion, 32 Current collecting plate, 32A Through hole, 33 Peripheral edge portion, 34 Recessed portion, 40 Metal plate, 41 Projection portion, 42 Flange portion, 43 Top portion, 44 Side surface portion, 45 Thin portion, 46 Groove, 50 Positive electrode core, 51 Positive electrode mixture layer, 52 Positive electrode core exposed portion, 60 Negative electrode core, 61 Negative electrode mixture layer, 62 Negative electrode core exposed portion

## Claims

1. A cylindrical battery comprising:
an electrode assembly of a first electrode and a second electrode that are wound with a separator interposed between the first electrode and the second electrode;
a bottomed cylindrical housing can that houses the electrode assembly;
a sealing assembly with which an opening portion of the housing can is capped;
a current collecting plate that is disposed between the sealing assembly and the electrode assembly; and
a metal plate that is joined to a surface of the current collecting plate at a side of the sealing assembly, wherein
the metal plate has:
a projection portion that has a top portion and a side surface portion and is provided at a center portion of the metal plate; and
a flange portion provided around the projection portion, and
the top portion is joined to the sealing assembly.

2. The cylindrical battery according to claim 1, wherein
the electrode assembly has an electrode lead connected to the first electrode, and
the electrode lead is held between the current collecting plate and the metal plate.

3. The cylindrical battery according to claim 1, wherein
the first electrode has a first electrode core, and a first electrode mixture layer formed on a surface of the first electrode core,
a first electrode core exposed portion from which the first electrode core is exposed is provided at an end portion of the electrode assembly at the side of the sealing assembly, and
the first electrode core exposed portion is joined to a surface of the current collecting plate at a side of the electrode assembly.

4. The cylindrical battery according to claim 1, wherein
the projection portion has a through hole.

5. The cylindrical battery according to claim 1, wherein
the projection portion has a plurality of the side surface portions, and
the side surface portions are provided at equal angular intervals from one another in a circumferential direction.

6. The cylindrical battery according to claim 1, wherein
the side surface portion extends along a direction inclined with respect to an axial direction of the housing can, and
an inclination angle of the side surface portion in an extending direction with respect to the axial direction of the housing can is greater than or equal to 30° and less than or equal to 60°.

7. The cylindrical battery according to claim 1, wherein
a peripheral edge portion provided on an outer periphery of the current collecting plate is joined to the sealing assembly.

8. The cylindrical battery according to claim 1, wherein
the current collecting plate is crimp-fixed to the opening portion of the housing can.

9. The cylindrical battery according to claim 1, wherein
the projection portion has a plurality of steps.

10. The cylindrical battery according to claim 1, wherein
at least a part of the side surface portion contacts the sealing assembly.
